# EUROPEAN PATENT SPECIFICATION

(11) **EP 1 420 195 B1**
(45) Date of publication and mention of the grant of the patent: **11.06.2008**
(21) Application number: 03077045.7
(22) Date of filing: 30.06.2003
(51) Int. Cl.: F16H 61/00, F16H 63/06, F16H 55/56

(54) **Continuously variable ratio drive**
Stufenlos verstellbare Getriebeeinrichtung
Systeme de transmission à variation continue

(30) Priority: 12.11.2002 IT MI20022391
(43) Date of publication of application: 19.05.2004
(73) Proprietor: PIAGGIO & C. S.p.A., 56025 Pontedera (Pisa) (IT)
(72) Inventor: Doveri, Stefano, 56033 Capannoli (Pisa) (IT)
(74) Representative: Zanardo, Giovanni

(56) References cited:
- EP-A- 0 558 752
- WO-A-99/02896
- US-B1- 6 468 170
- PATENT ABSTRACTS OF JAPAN vol. 007, no. 095 (M-209), 21 April 1983 (1983-04-21) & JP 58 017248 A (NISSAN JIDOSHA KK), 1 February 1983 (1983-02-01)

## Description

The present invention refers to a continuously variable ratio drive, corresponding to the preamble of claim 1 and as disclosed in EP 0558752 A.

In particular, the invention refers to a gearbox with expandable conical pulleys using a transmission belt for a two-wheeled vehicle like a scooter.

The principle upon which the operation of the gearbox is based is that of changing, moment by moment, the drive of the vehicle, as the load acting upon it (driver, fuel, baggage), the gradient of the road, the aerodynamic resistance, etc., vary.

Generally speaking, therefore, the gearbox is used to alter the rotation speed of the drive shaft to suit that of the driving wheel, and thus takes on the function of torque multiplier, i.e. a device which must provide greater "driving force" where the power of the motor is insufficient to drive forward the vehicle.

The presence of such a device is thus linked to the progression of the torque curve of the motor, i.e. to the absolute value of the torque supplied at the various rotation speeds of the motor itself.

With the term torque we mean the rotation moment which the shaft can transmit, at each drive imparted upon the piston due to the explosion of the air-petrol mixture, said piston transferring to the shaft a force which, multiplied by the "crank arm", generates a torque or rotation moment.

From the analysis of the torque and power curves of each engine it can be understood how, given the non-regular progression which can vary substantially as the number of revolutions varies, motorcyclists are able to supply a substantial torque only when the engine runs at a rather high speed.

The mechanical gearbox allows the best compromise between the resistances in operation and the speed of advancement to be sought after.

Thanks to the gearbox, the power delivered by the engine is sent to the driving wheel passing first from the primary transmission, then reaching the rear wheel of the motorcycle by means of the end transmission.

Through the years, different technical choices have been adopted by manufacturers to realise the gearbox, and amongst these those which are well-established include direct or cascade gearboxes.

Without going into the description of a gearbox, we mention only the fact that its purpose is that of modifying, as needs must, the transmission ratio between the engine and the wheels, so that for each number of revolutions of the engine there is a different number of revolutions of the wheels.

In the case of a two-wheeled vehicle, to send the rear wheel a high drive torque, when this is particularly necessary, for example when starting up or when gearing up, a gearbox with many gear combinations is used.

In such a way, by selecting a low gear a substantial reduction in the rotation speed between the entry and exit shaft of the gear is obtained with a corresponding proportional increase in torque, whereas with higher gears, on the other hand, the rear wheel moves quickly but a somewhat low torque is transmitted.

During motion it shall, therefore, be possible to keep, for all cruise speeds of the vehicle, a rotation speed of the engine which corresponds to an adequate power supply.

The best results in terms of acceleration and response by the vehicle are obtained by choosing the ratio which allows the engine to rev in a range of revolutions between a value close to where there is maximum torque and a value near close to where there is maximum power.

In recent times the stepless speed change gear has been made available, which in the form of a centrifugal change gear, known simply as a "change gear", has become one of the most widespread transmission systems in small and medium cc motorcycles thanks to the advantages which it offers in terms of pickup and low running costs.

Such a device is substantially a progressive gearbox capable of developing a continuous, and therefore infinite, range of ratios between a minimum and a maximum, established at the design stage.

The variation of the gears, indeed, is thus not gradual, i.e. realised so that a well-defined transmission ratio corresponds to a precise selected ratio, but rather continuous, according to the torque transmission ratio required to overcome the external resistences which the vehicle faces (slopes, variations in weight, bumpyness, etc.).

Generally, a varier consists of two pulleys and and a trapezoidal belt, each pulley consisting of two plates with a frusto-conical profile, facing each other so as to constitute a race upon which the transmission belt winds.

Of the two plates one is fixed whereas the other is free to move axially, so that for each displacement of the mobile plate there is a variation in the diameter of the pulley, passing from the point where it is closest together (larger diameter) to the point of maximum distance (lower diameter).

To cause such a displacement in the drive pulley there are some centrifugal masses, which by effect of the centrifugal force, slide inside suitable guides formed integrally with the mobile plate.

The moving together and apart of the mobile plate with respect to the fixed one on the drive pulley causes, through the trapezoidal belt, the opposite displacement of the mobile plate on the driven pulley, the mobile plate which is kept pressed against the fixed one thanks to the force applied by a spring. The consequent variation of the winding radii of the trapezoidal belt on the pulleys, generates the corresponding variation in the transmission ratio.

Thus, as both the centrifugal masses which act upon the plate of the drive pulley and the rigidity of the spring which keeps the plates of the driven pulley drawn together vary, one can understand the advantageous simplicity of variation of the pickup which a transmission of this type can generate.

Continuously variable ratios drive, or CVTs, are realised according to numerous types, all suitable for improving the performances of the vehicle thanks to an increase in the miles per gallon and a reduction in emissions, obtained thanks to the possibility of always keeping the motor on the best thermal yield values.

Such automatic CVT gearboxes with respect to conventional gearboxes also allow a reduction in polluting emissions to be obtained.

So as to be able to achieve such purposes it is, however, necessary to be able to apply a determined law of variation of the speed ratio which takes into account the numerous parameters such as those determined by the interaction between belt and pulley, to evaluate the forces and therefore the dynamic behaviour of the transmission to which the device is subject so as to be able to apply the correct axial thrusts to the expandable pulleys.

In an automatic variable ratio drive according to the prior art, the movement of the mobile part of the drive pulley is realised by inertia by a centrifugal regulator system with a variable number of clutch balls or rollers, which therefore constrains the functionality not allowing the intervention of the driver or of suitable devices.

The main purpose of the present invention is that of realising a Continuously variable ratio drive which does not have the aforementioned drawbacks of the prior art being totally controlled from the outside.

Advantageously, such a gearbox allows different ways of operating which can be selected by the driver of the vehicle and which can be actuated under the control of an electronic gearcase.

These and other purposes according to the present invention are achieved by a continuously variable ratio drive according to claim 1.

Further characteristics of the invention form the object of the dependent claims.

The continuously variable ratio drive of the type with expandable conical pulleys for an internal combustion engine according to the invention comprises a pair of pulleys, one being a drive pulley and the other being a driven pulley, between which a transmission belt slides, the drive pulley in turn comprising an axially mobile element, and a fixed element both in the form of frusto-conical discs facing towards each other so as to constitute a groove in which the belt slides, the mobile element being operatively connected to an electric motor commanded and driven by an electronic unit and suitable for causing the axial movement of the mobile element through engagement of cylindrical pins, housed in holes formed in an outer bush placed in rotation by the electric motor, in helical slots formed in an inner bush bound axially to the outside of the mobile element.

The characteristics and advantages of a continuously variable ratio drive according to the present invention shall become clearer from the following description, given as an example and not for limiting purposes, referring to the attached schematic drawings, in which:

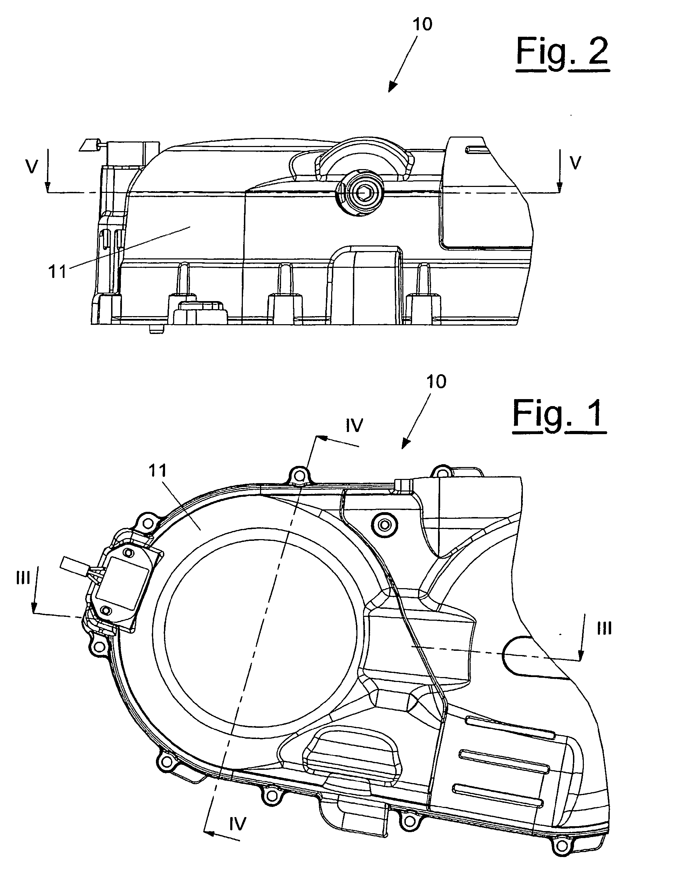

figure 1 is a schematic side view of a drive portion carrying the gearbox according to the present invention;
figure 2 is a view from below of the drive portion of figure 1;
figure 3 is a section view, depicting the gearbox according to the invention, outlined according to the line III-III of figure 1;
figure 4 is a section view, depicting the gearbox according to the invention, outlined according to the line IV-IV of figure 1;
figure 5 is a section view, depicting the gearbox according to the invention, outlined according to the line V-V of figure 2.

With reference to the figures, an internal combustion engine 10 of the two or four stroke type is partially illustrated, the engine having, housed in a suitably shaped case 11, a continuously variable ratio drive of the type with expandable conical pulleys, generically indicated with 20.

The continuously variable ratio drive 20 according to the invention comprises two pairs of conical pulleys of which just the drive pulley 32 is illustrated, mounted on an entry shaft 51 of the gearbox.

The illustrated drive pulley in turn comprises an axially mobile element 32', and a fixed element 32'' both in the form of frusto-conical discs and facing each other so as to constitute a groove in which a belt 31, preferably trapezoidal, slides.

In the drive pulley 32, the mobile element 32' is moved axially, so as to vary the winding radii of the trapezoidal belt 31 on the drive and driven pulleys and consequently the transmission ratio.

With the movement of the mobile element 32' of the drive pulley 32 corresponds an opposite displacement of the mobile part of the driven pulley, a movement which is countered by a spring and by a torque slave system suitably sized to exert sufficient pressure to avoid the slipping of the belt on the pulleys.

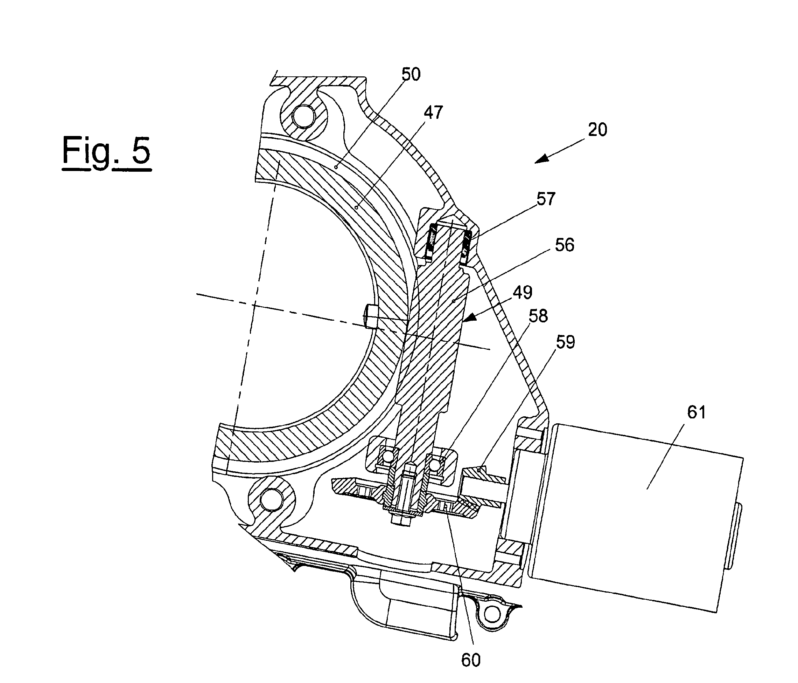

With particular reference to figure 5, a suitable electric motor 61, through a suitable transmission realised as a non-exclusive example by a pair of conical wheels 59, 60, makes a shaft 56, carrying a worm screw 49, move, supported by tw rolling bearings 57 and 58.

The worm screw 49 in turn makes a helical wheel 50 rotate integral with a cylindrical outer bush 47.

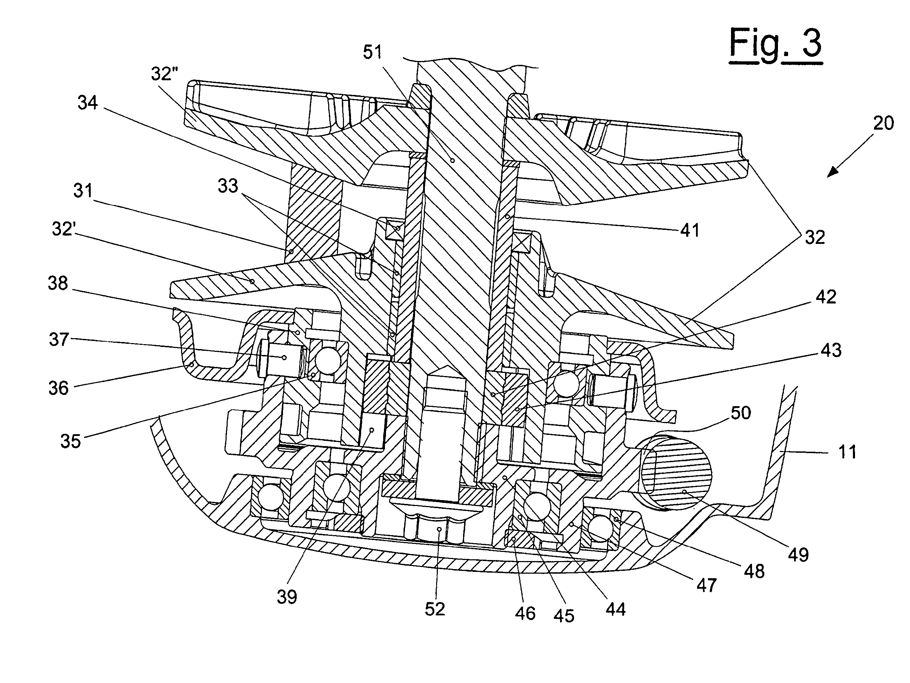

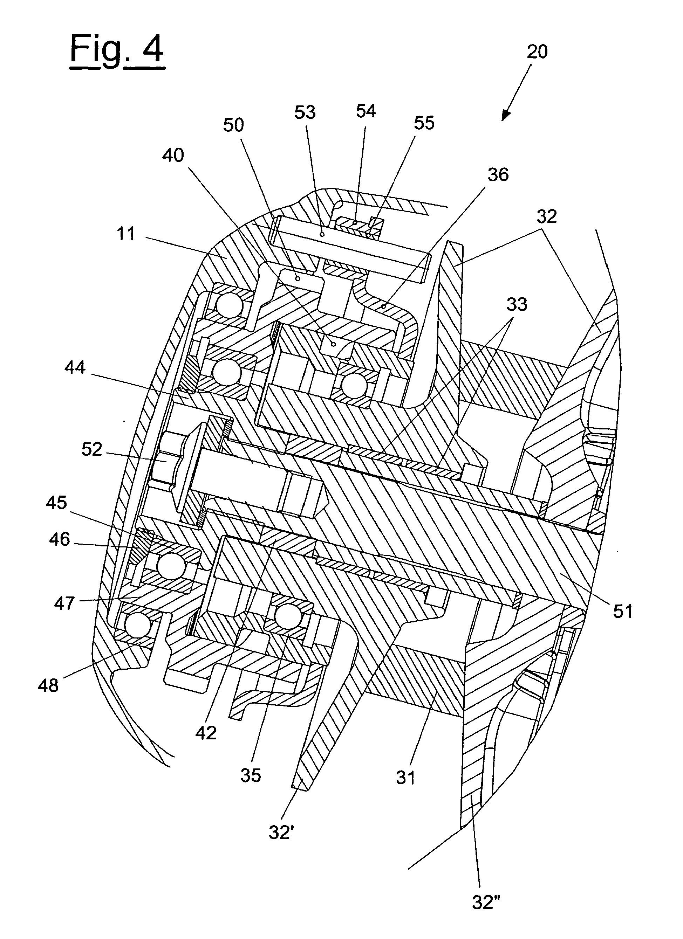

With reference also to figures 3 and 4 such an outer bush 47 is supported by a rolling bearing 45 at one end and rotates on a coaxial cylindrical inner bush 38.

The rolling bearing 45 is mounted on a bush for holding bearings 44 and is locked through a ring nut 46.

The bush for holding bearings 44 is bound onto the entry shaft 51 of the gearbox by a screw 52.

The bearing 48 constitutes an additional support for all of the command system of the gearbox.

The outer bush 47 carries housings which receive two or more cylindrical pins 37. The cylindrical pins 37 engage in helical slots 40 formed in the cylindrical inner bush 38. This bush 38 is locked against rotation through a flange 36, fixed to it rigidly, which carries a bush 54 in which a pin 53, fixed to the case 11 in the housing portion of the gearbox slides, through the interposition of a suitable ring 55 suitably made from an anti-friction material.

The mobile element 32' of the drive pulley 32 is axially bound to the inner bush 38 through the interposition of a bearing 35.

Such a mobile element 32' slides axially on the spacer 41, coaxial with the entry shaft 51 of the gearbox 20.

The anti-friction bushes 33 are positioned between the spacer 41 and the mobile element 32' of the drive pulley 32.

The mobile element 32' is bound to the entry shaft 51 of the gearbox through a sliding joint comprising a slide ring 42 and a plastic sliding block 43 radially fixed to the entry shaft 51 of the gearbox, said sliding block being arranged so as to engage in axial recesses 39 formed in the mobile element 32' of the drive pulley 32.

The sliding joint 42, 43 is lubricated through suitable grease which contributes to improving the sliding of the anti-friction bushes 33 on the spacer 41, and which is suitably contained by an oil seal 34, mounted on one of the ends of the hole of the mobile mobile element 32' of the drive pulley 32 and by the screens of the rolling bearings 45.

The gearbox 20 according to the preferred embodiment of the invention has the following operation.

The electric motor 61, commanded by an electronic control unit, makes the shaft 56, carrying the worm screw 49, rotate.

In turn the worm screw 49 makes the helical wheel 50 rotate integral with the outer bush 47, which rotates on the bearing 45 and on the inner bush 38.

On the outer bush 47 two or more holes are formed which house the cylindrical pins 37, which engage the helical slots 40 formed in the inner bush 38.

Through the coupling between cylindrical pins 37 and helical slots 40, the torque supplied by the electric motor 61, multiplied through the coupling between the worm screw 49 and the helical wheel 50, is split into an axial force, i.e. directed along the rotation axis of the pulley 32, and into a tangential component which translates into a residual torque, these actions being exerted on the inner bush 38.

Such an inner bush 38 cannot rotate on its own axis since the flange 36 is rigidly bound to it, at the ends of which the bush 54 is fixed and inside of which the pin 53, fixed to the wall of the case 11, slides, in such a way countering the tangential component of the forces between inner bush 38 and cylindrical pins 37.

The axial component of the forces between cylindrical pins 37 and helical slots 40 of the inner bush 38 thus causes a translation of the inner bush itself.

This axial movement can take place in the two directions, according to the direction of rotation of the outer bush 47, i.e. according to the direction of rotation of the electric motor 61 which commands the gearbox.

The axial movement of the inner bush 38 is transferred to the mobile element 32' of the drive pulley 32 through the rolling bearing 35.

This axial movement of the mobile element 32' causes the variation in the winding radius of the trapedoidal belt 31 and consequently the variation in the transmission ratio between the drive pulley 32 and the driven pulley.

During the displacement of the mobile element 32' of the drive pulley 32 under the action of the electric motor 61, the contact between the trapezoidal belt 31 and the pulley itself is ensured by the load applied onto it by the counter spring present in the driven group.

The drive torque is transferred from the entry shaft 51 of the gearbox to the mobile element 32' of the drive pulley 32 through the slider 42 and the sliding block 43.

In such a way the sliding prismatic coupling between entry shaft 51 of the gearbox and mobile element 32' of the drive pulley 32 is ensured.

The gearbox 20 according to the invention allows the aforementioned centrifugal speed varier to be replaced with a device which allows the way the gearbox operates to be controlled from the outside.

Such a control provides different command possibilities of the gearbox, able to be selected freely by the driver of the vehicle and capable of being actuated as well as being controlable through an electronic gearcase.

## Claims

1. Continuously variable ratio drive of the type with expandable conical pulleys for internal combustion engines comprising a pair of pulleys, one being a drive pulley and the other being a driven pulley, between which a transmission belt (31) slides, the drive pulley (32) in turn comprising an axially mobile element (32'), and a fixed element (32") both in the form of frusto-conical discs facing towards each other so as to constitute a groove in which the belt (31) slides, said mobile element (32') is operatively connected to an electric motor (61) driven and controlled by an electronic unit and suitable for causing the axial movement of the mobile element (32') **characterised in that** said electric motor (61) causes the axial movement of the mobile element (32') through engagement of cylindrical pins (37), housed in holes formed in an outer bush (47) placed in rotation by said electric motor (61), in helical slots (40) formed in an inner bush (38) bound axially to the outside of said mobile element (32').

2. Continuously variable ratio drive according to claim 1, wherein said electric motor (61) is connected through a suitable transmission to a shaft (56) carrying a worm screw (49) suitable for transferring the motion to a helical wheel (50) integral with said outer bush (47).

3. Continuously variable ratio drive according to claim 1, wherein said outer bush (47) is supported by a rolling bearing (45) at one end and rotates on said coaxial cylindrical inner bush (38).

4. Continuously variable ratio drive according to claim 1, wherein said cylindrical inner bush (38) is locked against rotation through a flange (36) rigidly fixed to it carrying a bush (54) in which a pin (53) is slidably foreseen fixed to a case (11) housing the gearbox.

5. Continuously variable ratio drive according to claim 1, wherein said mobile element (32') of the drive pulley (32) is axially bound to the inner bush (38), through the interposition of a bearing (35).

6. Continuously variable ratio drive according to claim 5, wherein said mobile element (32') is arranged to slide axially on a spacer (41), arranged coaxial to the entry shaft (51) of the gearbox (20), with antifriction bushes (33) being positioned between the spacer (41) and the mobile element (32').

7. Continuously variable ratio drive according to claim 6, wherein said mobile element (32') is arranged bound to the entry shaft (51) of the gearbox through a sliding joint comprising a slide ring (42) and a sliding block (43) preferably made from plastic radially fixed to the entry shaft (51) of the gearbox, said sliding block (43) being arranged so as to engage in axial recesses (39) formed in the mobile element (32') of the drive pulley (32).

8. Transmission system for an engine comprising a gearbox (20) according to any one of the previous claims.

9. Motorised two-wheeled vehicle equipped with a transmission system comprising a gearbox (20) according to any one of claims 1 to 8.

## Patentansprüche

1. Antrieb mit stufenlos verstellbarem Übersetzungsverhältnis von der Art mit ausfahrbaren konischen Riemenscheiben für Brennkraftmaschinen, umfassend ein Paar Riemenscheiben, wobei eine eine antreibende Riemenscheibe ist und die andere eine angetriebene Riemenscheibe ist, zwischen denen ein Übertragungsriemen (31) gleitet, wobei die antreibende Riemenscheibe (32) wiederum ein axial bewegliches Element (32') und ein festes Element (32") umfasst, die beide in der Form von einander zugewandten, kegelstumpfförmigen Scheiben vorliegen, so dass eine Nut gebildet ist, in der der Riemen (31) gleitet, wobei das bewegliche Element (32') funktional mit einem Elektromotor (61) verbunden ist, der durch eine elektronische Einheit gesteuert ist und dafür geeignet ist, die axiale Bewegung des beweglichen Elements (32') zu bewirken, **dadurch gekennzeichnet, dass** der Elektromotor (61) die axiale Bewegung des beweglichen Elements (32') durch Einrückung zylindrischer Stifte (37), die in Löchern untergebracht sind, die in einer äußeren Buchse (47) ausgebildet sind, welche durch den Elektromotor (61) in Rotation versetzt wird, in wendelförmige Schlitze (40), die in einer inneren Buchse (38) ausgebildet sind, welche an die Außenseite des beweglichen Elements (32') axial gebunden ist, bewirkt.

2. Antrieb mit stufenlos verstellbarem Übersetzungsverhältnis nach Anspruch 1, wobei der Elektromotor (61) durch eine geeignete Übertragung mit einer Welle (56) verbunden ist, die eine Schnecke (49) trägt, die dafür geeignet ist, die Bewegung auf ein Schneckenrad (50) zu übertragen, das einstückig mit der äußeren Buchse (47) ist.

3. Antrieb mit stufenlos verstellbarem Übersetzungsverhältnis nach Anspruch 1, wobei die äußere Buchse (47) durch ein Wälzlager (45) an einem Ende gelagert ist und auf der koaxialen zylindrischen inneren Buchse (38) rotiert.

4. Antrieb mit stufenlos verstellbarem Übersetzungsverhältnis nach Anspruch 1, wobei die zylindrische innere Buchse (38) gegen Rotation durch einen Flansch (36) verriegelt ist, der starr an ihr befestigt ist und eine Buchse (54) trägt, in der ein Stift (53) verschiebbar vorgesehen ist, der an einem Gehäuse (11) befestigt ist, in dem das Getriebe untergebracht ist.

5. Antrieb mit stufenlos verstellbarem Übersetzungsverhältnis nach Anspruch 1, wobei das bewegliche Element (32') der antreibenden Riemenscheibe (32) an die innere Buchse (38) durch Zwischenordnung eines Lagers (35) axial gebunden ist.

6. Antrieb mit stufenlos verstellbarem Übersetzungsverhältnis nach Anspruch 5, wobei das bewegliche Element (32') eingerichtet ist, um axial auf einem Abstandshalter (41) zu gleiten, der koaxial zu der Eingangswelle (51) des Getriebes (20) angeordnet ist, wobei Gleitbuchsen (33) zwischen dem Abstandshalter (41) und dem beweglichen Element (32') angeordnet sind.

7. Antrieb mit stufenlos verstellbarem Übersetzungsverhältnis nach Anspruch 6, wobei das bewegliche Element (32') so eingerichtet ist, dass es an die Eingangswelle (51) des Getriebes durch eine Gleitverbindung gebunden ist, die einen Gleitring (42) und einen Gleitblock (43) umfasst, der vorzugsweise aus Kunststoff hergestellt ist und an die Eingangswelle (51) des Getriebes radial gebunden ist, wobei der Gleitblock (43) derart eingerichtet ist, dass er in axialen Ausnehmungen (39) in Eingriff steht, die in dem beweglichen Element (32') der antreibenden Riemenscheibe (32) ausgebildet sind.

8. Getriebesystem für eine Maschine, die ein Getriebe (20) nach einem der vorhergehenden Ansprüche umfasst.

9. Motorisiertes zweirädriges Fahrzeug, das mit einem Übertragungssystem ausgestattet ist, das ein Getriebe (20) nach einem der Ansprüche 1 bis 8 umfasst.

## Revendications

1. Transmission à variation continue du type à poulies coniques expansibles pour moteurs à combustion interne comprenant une paire de poulies, l'une étant une poulie motrice et l'autre étant une poulie réceptrice, entre lesquelles glisse une courroie de transmission (31), la poulie motrice (32) elle-même comprenant un élément mobile axialement (32'), et un élément fixe (32") tous deux sous la forme de disques tronconiques tournés l'un vers l'autre afin de constituer une gorge dans laquelle glisse la courroie (31), ledit élément mobile (32') est connecté fonctionnellement à un moteur électrique (61) entraîné et commandé par une unité électronique et adapté pour provoquer le mouvement axial de l'élément mobile (32'), **caractérisée en ce que** ledit moteur électrique (61) provoque le mouvement axial de l'élément mobile (32') par l'engagement d'ergots cylindriques (37), logés dans des trous formés dans une douille extérieure (47) mise en rotation par ledit moteur électrique (61), dans des fentes hélicoïdales (40) formées dans une douille intérieure (38) liée axialement à la partie extérieure dudit élément mobile (32').

2. Transmission à variation continue selon la revendication 1, dans laquelle ledit moteur électrique (61) est connecté, par l'intermédiaire d'une transmission appropriée, à un arbre (56) portant une vis sans fin (49) apte à transférer le mouvement à une roue hélicoïdale (50) solidaire de ladite douille extérieure (47).

3. Transmission à variation continue selon la revendication 1, dans laquelle ladite douille extérieure (47) est supportée par un roulement (45) à une extrémité et tourne sur ladite douille intérieure cylindrique coaxiale (38).

4. Transmission à variation continue selon la revendication 1, dans laquelle ladite douille intérieure cylindrique (38) est bloquée pour ne pas tourner par l'intermédiaire d'une bride (36) fixée de manière rigide sur celle-ci portant une douille (54) dans laquelle un axe (53) est prévu de façon glissante, fixé à un carter (11) qui renferme la boîte de vitesses.

5. Transmission à variation continue selon la revendication 1, dans laquelle ledit élément mobile (32') de la poulie motrice (32) est lié axialement à la douille intérieure (38), par un roulement (35) intercalé.

6. Transmission à variation continue selon la revendication 5, dans laquelle ledit élément mobile (32') est adapté pour glisser axialement sur une entretoise (41), qui est coaxiale à l'arbre d'entrée (51) de la boîte de vitesses (20), des douilles antifriction (33) étant placées entre l'entretoise (41) et l'élément mobile (32').

7. Transmission à variation continue selon la revendication 6, dans laquelle ledit élément mobile (32') est lié à l'arbre d'entrée (51) de la boîte de vitesses par l'intermédiaire d'un joint coulissant comprenant un anneau de glissement (42) et un bloc coulissant (43) de préférence en matière plastique, fixé radialement à l'arbre d'entrée (51) de la boîte de vitesses, ledit bloc coulissant (43) étant placé de façon à s'engager dans des évidements axiaux (39) formés dans l'élément mobile (32') de la poulie motrice (32).

8. Système de transmission pour moteur comprenant une boîte de vitesses (20) selon l'une quelconque des revendications précédentes.

9. Véhicule à deux roues motorisé équipé d'un système de transmission comprenant une boîte de vitesses (20) selon l'une quelconque des revendications 1 à 8.
